# EUROPEAN PATENT SPECIFICATION

(11) **EP 1 662 854 B1**
(45) Date of publication and mention of the grant of the patent: **14.07.2010**
(21) Application number: 04800270.3
(22) Date of filing: 04.11.2004
(51) Int. Cl.: A01B 3/46

(54) **A DEVICE IN AN ARRANGEMENT FOR A REVERSIBLE PLOUGH**
VORRICHTUNG IN EINER ANORDNUNG FÜR EINEN DREHPFLUG
DISPOSITIF PLACE DANS UN AGENCEMENT ET DESTINE A UNE CHARRUE REVERSIBLE

(30) Priority: 06.11.2003 SE 0302941
(43) Date of publication of application: 07.06.2006
(73) Proprietor: Kongskilde Industries A/S, 4180 Sorö (DK)
(72) Inventor: HAKANSSON, Bo, S-590 96 Överum (SE)
(74) Representative: Karlsson, Leif Gunnar Börje
(86) International application number: PCT/SE2004/001607
(87) International publication number: WO 2005/043974

(56) References cited:
- DE-A1- 2 222 510
- DE-A1- 2 537 904
- FR-A1- 2 556 171
- US-A- 4 067 396

## Description

### Technical Field

The present invention relates to a device in a reversing arrangement for a reversible plough.

### Background of the Invention

A tractor pulled plough arrangement of the wagon plough type has a front frame, a rear frame and a support wagon, where the support wagon is arranged between the front and the rear frame. Each frame has two rows of plough shares, one row of shares directed to the right and another row of shares directed to the left. The frames are arranged to be pivotally mounted to reverse in support parts through approximately 180° around a longitudinal axis of the plough arrangement. Another type of plough arrangement is the semi-mounted plough having a frame and a support wheel. Similarly to the wagon plough the frame is provided with the same kind of plough share configuration and is reversed in the same way.

At an end of the field to be ploughed the tractor pulling the plough arrangement turns 180° for working on new furrows. Before the tractor turns the plough arrangement is lifted by hydraulic means at the support wagon or the wheel. Thereafter the tractor is turned and the plough arrangement is reversed by the hydraulic system of the tractor 180° around its longitudinal axis, so that a second row of ploughs - previously directed substantially vertically upwards - is put into action in the soil after the plough arrangement is lowered down. In this way all furrows on the field will have the same direction, as desired.

In order to pivot or reverse the reversible plough arrangement, the plough arrangement is provided with means for pivoting/reversing. Nowadays these means can include at least two hydraulic cylinders (see for example US-A-4 067 396), but also a reserving motor, cogwheels connected to a rack (see for example FR-A-2 556 171) or auxiliary hydraulic cylinders to reverse the plough arrangement. The first solution is the most commonly used arrangement to reverse a reversible plough arrangement. A first hydraulic cylinder is provided with a piston rod that is connected to the plough arrangement and causes the plough arrangement to pivot around its axis through a dead center position (the position where the plough arrangement is hanging symmetrically in respect of the support parts. From the dead center position the plough arrangement will normally continue to pivot around its axis by its own weight and a second hydraulic cylinder is used to control the continued pivoting movement.

In some reversible plough arrangements, like the wagon plough, the rear frame forms a counter-weight that allows the plough to get into a rest position even if the pivoting has passed the dead center position. To enable a controlled reversing action of these plough arrangements they have been provided with an additional hydraulic cylinder that urges the plough arrangement further in its rotation in the last part of the reversing action. The operation of this additional hydraulic cylinder, also called auxiliary reverse cylinder, needs to be synchronized with the operation of the other cylinders so that the auxiliary reverse cylinder starts to function at the exactly right moment. This requires a relatively complicated and sensitive hydraulic cylinder valve that measures the plough position during the reversing action. If the auxiliary reverse cylinder falls out of step with the other hydraulic cylinders during the reversing process the reversing arrangement can be damaged.

There are different ways of measuring the reversing position of the plough arrangement. A first solution is to use mechanical position indicators for measuring the reversing position. They are however not very suitable to be used in the tough environment of ploughing. Secondly, electric control can be used to synchronize the auxiliary reverse cylinder to the reversing position of the plough arrangement. This is, however, not either a suitable solution. Thirdly, the measured pressure in the first hydraulic cylinder could be used as an indicator of the reversing position as the pressure in the cylinder used reaches a certain peak pressure when it reaches the end position. After the end position has been indicated, a valve opens and the auxiliary reverse cylinder is activated to continue the reversing action of the plough arrangement to its new operating position.

A further problem with some reversible plough arrangements is that during operation the plough arrangement may leave its operating plough position due to external forces and by the external forces pivot back around its longitudinal axis since the only force to keep it in position is the weight of the plough arrangement. To avoid this, plough arrangements have been provided with a lock. In certain cases the auxiliary reverse cylinder or more specifically the valve of the auxiliary reverse cylinder has been the lock. This has however not always been advantageous since the plough arrangement in some cases needs to be able to pivot, when for example the tractor passes an obstacle, to avoid that the plough arrangement is damaged by the obstacle.

Yet a further problem with some reversible plough arrangements, for example semi-mounted ploughs, is that if additional equipment, like a heavy furrow press, is connected on the plough it can cause the same problem as the rear frame on wagon ploughs. With the semi-mounted plough there is also the problem of reversing the plough arrangement in a slope or inclined fields since the dead center position is changed due to the inclination.

The main object of the invention is accordingly to provide a reversing arrangement that solves the above stated problems.

### The Invention

The invention fulfills the main object by providing a device in a reversing arrangement with a frame, where the device has an auxiliary reverse device comprising a resilient, energy storing actuator assembly for storing energy during the first half of the frame pivoting movement and resiliently releasing this energy during the second half thereof. Further aspects of the invention are defined in the dependent claims.

### Brief Description of the Drawings

The invention will be described in further detail below under reference to the accompanying drawings, in which
Fig 1 is a side view of a wagon plough arrangement with a reversing arrangement according to the present invention,
Fig 2 is a view along the line A-A in Fig 1 of a reversing arrangement according to the present invention, and
Fig 3 is another view along the line A-A in Fig 1 of the reversing arrangement according to the present invention, while the plough arrangement is reversed.

### Detailed Description of a Preferred Embodiment

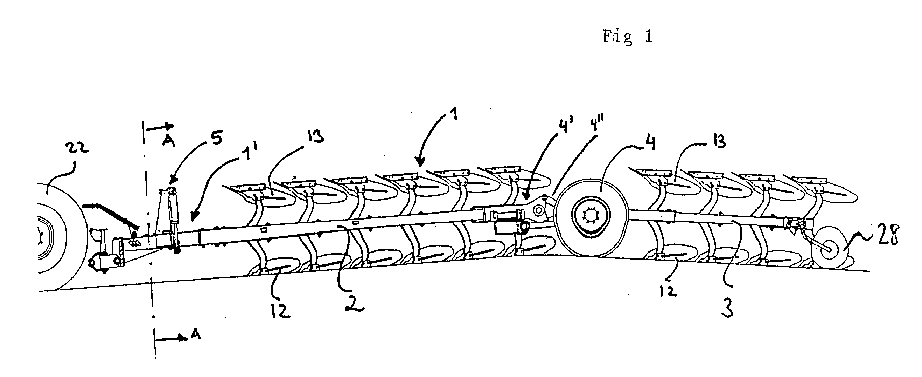

Fig 1 is a side view of a reversible wagon plough arrangement 1 to be attached to a tractor 22 at a first end 1' and having a front frame 2 with six sets of ploughs, a rear frame 3 with four sets of ploughs and a support wagon 4. Further, a support wheel 28 arranged on a rear part of the rear frame 3 is shown. The support wagon 4 is arranged between the front frame 2 and the rear frame 3, and includes an arrangement 4' for lifting the plough arrangement during transport and reversing action, arrangements for transferring a reversing action of the plough arrangement 1 to the rear frame 3 from a reversing arrangement 5 and a hinge 4" for connecting the rear frame to the front frame.

Each frame 2, 3 has two rows of plough shares, where each row includes a number of shares 12, 13. Each set of shares 12, 13 includes one share from each row, and one of the shares in each set is adapted to plough on the right and another share in each set is adapted to plough on the left. The frames 2, 3 are arranged to be pivotally mounted to be reversed in two support parts (first end 1' and support wagon 4) approximately 180° around a longitudinal axis of the plough arrangement 1 by the reversing arrangement 5.

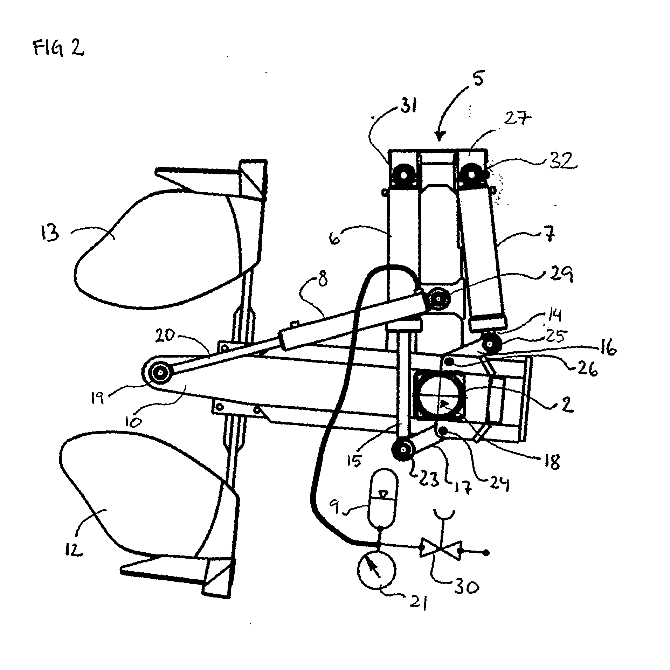

Fig 2 is a view along the line A-A of the reversing arrangement 5, including two hydraulic reversing cylinders 6, 7, an auxiliary reversing cylinder 8, an accumulator 9, a plough support beam 10 and a link arrangement. The link arrangement includes two link arms 16, 17 pivotally connecting each of the two hydraulic cylinders 6, 7 with the support beam 10, where the link arm 17 is pivotally attached to a pin 23 on a piston rod 15 of the cylinder 6 and to a pin 24 on the support beam 10, and where the link arm 16 is pivotally attached to a pin 25 on a piston rod 14 of the cylinder 7 and to a pin 26 on the support beam 10. On the beam 10 is further arranged a pin 19 on which one end of a piston rod 20 of the auxiliary reverse cylinder 8 is pivotally arranged. The other end of the auxiliary reverse cylinder 8 is pivotally attached to a pin 29 on a fixed frame 27 of the reversing arrangement 5.

The support beam 10 further carries the shares 12, 13, and the two shares 12, 13 shown in Fig 2 are the first shares in the two rows of shares in the front frame 2 as shown in Fig 1. The shares 12, 13 thus constitute the first set of shares in the ploughing direction. In Fig 2, it is the share 12 that currently is in operating position. The beam 10 is pivotally arranged on the longitudinal axis of the first end 1' of the plough arrangement 1.

A pressure indicator 21, a shut-off valve 30 and the auxiliary reverse cylinder 8 are connected to the accumulator 9. These parts constitute an independent and separate system, whereas the hydraulic cylinders 6, 7 are connected to the hydraulic system of the tractor 22 and also controlled from the tractor by a control panel (not shown). The shut-off valve 30 enables modification of the volume and compression relations in the system of the auxiliary reverse cylinder 8 and the accumulator 9. By these modifications the characteristics of the auxiliary reverse cylinder 8 can be set, for example the resilient force during the operation of the plough arrangement. The shut-off valve 30 is connected to modification means (not shown). Typically, the accumulator 9 is a membrane accumulator or a piston accumulator.

The hydraulic cylinders 6, 7 are pivotally attached to the frame 27 of the reversing arrangement 5 by pins 31 and 32, respectively.

Now the operation of the reversing arrangement 5 will be described briefly. In Fig 2 the plough arrangement is arranged so that the plough shares 12 are in operation. The tractor 22 is about to turn around to plough another furrow with the other row of plough shares 13. Before the plough arrangement 1 can be reversed the plough arrangement 1 is lifted from the soil by the tractor and the arrangement 4' on the support wagon 4. Likewise, the plough arrangement 1 will be lowered to the soil after the reversing action or movement.

The control panel (not shown) for the reversing arrangement 5 in the tractor 22 is operated to reverse the plough arrangement 1. This initiates that the piston rod 14 in the hydraulic cylinder 7 is extended by the hydraulic oil reversing the plough arrangement via the link arm 16 pivotally connecting the piston rod 14 and the plough arrangement 1 around the longitudinal axis 18 of the plough arrangement 1. From the position shown in Fig 2 the plough arrangement 1 will reverse clockwise. When the piston rod 14 of the hydraulic cylinder 7 is extended, the piston rod 20 of the auxiliary reverse cylinder 8 will be retracted and a pressure will be built up in the accumulator 9.

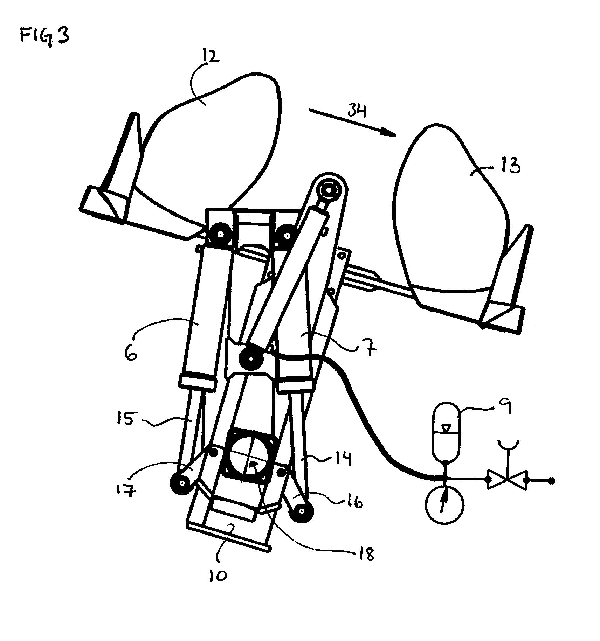

In Fig 3 the plough arrangement 1 has been reversed around the longitudinal axis 18 through the dead center position and the piston rod 15 of the second hydraulic cylinder 6 has started to retract. The first hydraulic cylinder 7 and its piston rod 14 are completely extended. The retraction of the second piston rod 15, which is pivotally connected to the plough arrangement 1 via the link arm 17, will help the plough share 13 to reach into its operating position in a controlled manner. The second hydraulic cylinder 6 is working as hydraulic brake with a throttle valve (not shown) that can be adjusted to control the reversing speed in the last part of the reversing action. Basically, the weight of the plough arrangement 1 will reverse it into the new operating position and the hydraulic cylinder 6 will ensure a smooth and controlled reversing action of the plough arrangement 1.

In some cases, for example in a slope or due to the counterweight of the rear frame 3, the plough arrangement 1 will find an inappropriate rest position even though the dead center position has been passed. To ensure a controlled reversing of the plough arrangement 1 in these cases the auxiliary reverse cylinder 8 has been provided, which uses the pressure built-up in the accumulator 9 during the first half of the reverse action or movement to the dead center position to push the plough arrangement 1 during the second part of the reversing action or movement through any rest position.

The auxiliary reverse cylinder 8 that is pivotally connected to the beam 10 via the pin 19, pushes via its piston rod 20 the plough arrangement 1 in the reversing direction (the direction for the present reversing action of the plough arrangement 1, shown with an arrow 34 in Fig 3). In Fig 3 the piston rod 20 of the auxiliary reverse cylinder 8 is almost completely retracted and is about to extend to help the plough arrangement 1 to reverse completely and enter its new operating position. As said above, the built-up pressure in the accumulator 9 is used after the dead center position is passed, and the piston rod 20 extends by the pressure and pushes the plough arrangement 1 down into the operating position.

After the plough arrangement 1 is reversed, and lowered to operate, and the tractor has started to plough another set of furrows the auxiliary reverse cylinder 8 will act as a resilient holding element on the plough arrangement 1 to keep it in position and prevent it from lifting under the influence of the external forces. The resilient construction will however allow the plough to lift from its operating position if the tractor should pass over an obstacle. The tractor will in most cases turn around the plough arrangement during the reversing of the plough arrangement.

The volume and gas compression relation in the accumulator 9 that can be modified by the shut-off valve 30 is selected to secure the double function of the auxiliary reverse cylinder 8: firstly to enable the auxiliary reverse cylinder 8 to push down the plough arrangement 1 during the second half of the reversing action or movement of the plough arrangement, and secondly to keep the plough arrangement in working position during its operation and still allow temporary movements of the plough arrangement.

As an alternative to the auxiliary reverse cylinder 8 shown in Figs 2 and 3 a mechanical spring can be used as auxiliary reverse device. In this modification there is no need for the accumulator 9, the pressure indicator 21 or the shut-off valve 30. The energy of the reversing action is built up in the mechanical spring, thereby also being an energy storage, as it is compressed, and it is released after the dead center position has been passed and the spring extends. The characteristics of the mechanical spring are selected to enable the dual function of the spring as an auxiliary reverse device.

Another alternative is to use a gas spring as an auxiliary reverse device. The energy of the reversing action is built up in the gas spring, thereby also being an energy storage, as it is compressed, and it is released after the dead center position has been passed and the spring extends. The characteristics of the gas spring are selected to enable the dual function of the spring as an auxiliary reverse device.

The system and function of the auxiliary reverse device or cylinder and the accumulator will in the claims be named actuator assembly including all the parts and their functionality.

Further the accumulator, i.e. the membrane accumulator or the piston accumulator, can be replaced by any other kind of accumulator giving the same function like for example a pneumatic accumulator.

The invention should not be limited to the shown embodiment, but several modifications within the scope of the appended claims are possible.

## Claims

1. A device in an arrangement (5) for reversing a plough arrangement (1), including an elongated frame (2), which is pivotable around its longitudinal axis (18), is provided with two rows of plough shares (12, 13) alternatively being adapted to be soil engaging, and has a support device (4) at its rear end, wherein the reversing arrangement comprises two hydraulic reverse cylinders (6, 7) for reversing or pivoting the frame (2), **characterized by** an auxiliary reverse device comprising a resilient, energy storing actuator assembly (8) for storing energy during the first half of the frame pivoting movement and resiliently releasing this energy during the second half thereof.

2. A device according to claim 1, wherein the plough arrangement (1) is a wagon plough further including a rear frame (3), and said rear frame (3) is connected to the front frame (2) via hinge means on the support device, further including sets of plough shares (12, 13), where each set of ploughs share has ploughs that are directed to the right and to the left being interconnected is arranged to be pivotally mounted to reverse in a support part (1') through approximately 180° around a longitudinal axis (18) extending in the direction of said plough arrangement (1) by the reversing arrangement (5).

3. A device according to claim 1, wherein the plough arrangement (1) is a semi-mounted plough.

4. A device according to any of claims 1-3, wherein the actuator assembly (8) is a mechanical spring.

5. A device according to any of claims 1-3, wherein the actuator assembly (8) is a gas spring.

6. A device according to any of claims 1-3, wherein the actuator assembly is a hydraulic cylinder (8) with an energy storing means (9).

7. A device according to claim 6, wherein the energy storage means is an accumulator.

8. A device according to any of claims 6 or 7, wherein the energy storage means (9) is a membrane accumulator having oil and gas as acting fluids.

9. A device according to claim 8, wherein a volume and gas compression relation in the accumulator (9) can be modified with a shut-off valve (30).

10. A device according to any of the preceding claims, wherein the auxiliary reverse device (8) is resiliently arranged to keep the plough arrangement (1) in operating position, and further arranged to enable the plough arrangement (1) to temporarily deviate from the operating position.

## Patentansprüche

1. Einrichtung in einer Anordnung (5) zum Umkehren einer Pfluganordnung (1), die einen länglichen Rahmen (2) einschließt, der um seine Längsachse (18) schwenkbar ist, mit zwei Reihen von Pflugscharen (12, 13) versehen ist, die alternativ dazu ausgebildet sind, am Boden anzugreifen, und eine Stützeinrichtung (4) an ihrem hinteren Ende hat, wobei die Umkehranordnung zwei hydraulische Umkehrzylinder (6, 7) zum Umkehren oder Schwenken des Rahmens (2) aufweist, **gekennzeichnet durch** eine Hilfsumkehreinrichtung, die einen elastischen energiespeichernden Betätigungselementaufbau (8) zum Speichern von Energie während der ersten Hälfte der Schwenkbewegung des Rahmens und zum elastischen Abgeben dieser Energie während der zweiten Hälfte derselben aufweist.

2. Einrichtung nach Anspruch 1, bei der die Pfluganordnung (1) ein Wagenpflug ist, der weiter einen hinteren Rahmen (3) aufweist, und welcher hinterer Rahmen (3) mit dem vorderen Rahmen (2) über Scharniermittel an der Stützeinrichtung verbunden ist, weiter Sätze von Pflugscharen (12, 13) aufweist, wobei jeder Satz von Pflugscharen Pflüge hat, die nach rechts und nach links gerichtet sind und miteinander verbunden sind, und dazu ausgebildet ist, schwenkbar in einem Stützteil (1') zum Umkehren durch die Umkehranordnung (5) um ungefähr 180° um eine Längsachse (18) angebracht zu sein, die sich in der Richtung der Pfluganordnung (1) erstreckt.

3. Einrichtung nach Anspruch 1, bei der die Pfluganordnung (1) ein halbmontierter Pflug ist.

4. Einrichtung nach einem der Ansprüche 1 bis 3, bei der der Betätigungselementaufbau (8) eine mechanische Feder ist.

5. Einrichtung nach einem der Ansprüche 1 bis 3, bei der der Betätigungselementaufbau (8) eine Gasfeder ist.

6. Einrichtung nach einem der Ansprüche 1 bis 3, bei der der Betätigungselementaufbau ein hydraulischer Zylinder (8) mit einem Energiespeichermittel (9) ist.

7. Einrichtung nach Anspruch 6, bei der das Energiespeichermittel ein Akkumulator ist.

8. Einrichtung nach einem der Ansprüche 6 oder 7, bei der die Energiespeichermittel (9) ein Membranakkumulator sind, der Öl und Gas als Betätigungsfluid hat.

9. Einrichtung nach Anspruch 8, bei der eine Volumen- und Gaskompressionsbeziehung in dem Akkumulator (9) durch ein Absperrventil (30) verändert werden kann.

10. Einrichtung nach einem der vorangehenden Ansprüche, bei der die Hilfsumkehreinrichtung (8) elastisch angeordnet ist, um die Pfluganordnung (1) in der Betriebsstellung zu halten, und weiter dazu ausgebildet ist, dass die Pfluganordnung (1) zeitweilig von der Betriebsstellung abweichen kann.

## Revendications

1. Dispositif dans un agencement (5) pour retourner un agencement de charrue (1), comprenant un châssis allongé (2), qui peut être pivoté autour de son axe longitudinal (18), muni de deux rangées de socs de charrue (12, 13) adaptées pour s'engager alternativement dans la terre, et comportant un dispositif de support (4) à son extrémité arrière, dans lequel l'agencement de retournement comprend deux cylindres hydrauliques de retournement (6, 7) pour retourner ou faire pivoter le châssis (2),
**caractérisé par** un dispositif de retournement auxiliaire comprenant un ensemble actionneur élastique de stockage d'énergie (8) pour stocker de l'énergie durant la première moitié du mouvement de pivotement du châssis et libérer élastiquement cette énergie durant la deuxième moitié de celui-ci.

2. Dispositif selon la revendication 1, dans lequel l'agencement de charrue (1) est une charrue remorque comprenant en outre un châssis arrière (3), et ledit châssis arrière (3) est relié au châssis avant (2) par l'intermédiaire de moyens d'articulation sur le dispositif de support, comprenant en outre des groupes de socs de charrue (12, 13), où chaque groupe de socs de charrue a des socs qui sont orientés vers la droite et vers la gauche en étant interconnectés, est agencé pour être monté de manière pivotante pour être retourné dans une partie de support (1') sur environ 180° autour d'un axe longitudinal (18) s'étendant dans la direction dudit agencement de charrue (1) par ledit agencement de retournement (5).

3. Dispositif selon la revendication 1, dans lequel l'agencement de charrue (1) est une charrue semi-portée.

4. Dispositif selon l'une quelconque des revendications 1 à 3, dans lequel l'ensemble actionneur (8) est un ressort mécanique.

5. Dispositif selon l'une quelconque des revendications 1 à 3, dans lequel l'ensemble actionneur (8) est un ressort à gaz.

6. Dispositif selon l'une quelconque des revendications 1 à 3, dans lequel l'ensemble actionneur est un cylindre hydraulique (8) avec un moyen de stockage d'énergie (9).

7. Dispositif selon la revendication 6, dans lequel le moyen de stockage d'énergie est un accumulateur.

8. Dispositif selon l'une quelconque des revendications 6 ou 7, dans lequel le moyen de stockage d'énergie (9) est un accumulateur à membrane avec de l'huile et du gaz comme fluides d'actionnement.

9. Dispositif selon la revendication 8, dans lequel une relation de volume et de compression de gaz dans l'accumulateur (9) peut être modifiée avec une vanne d'arrêt (30).

10. Dispositif selon l'une quelconque des revendications précédentes, dans lequel le dispositif de retournement auxiliaire (8) est agencé élastiquement pour maintenir l'agencement de charrue (1) en position de fonctionnement et est en outre agencé pour permettre à l'agencement de charrue (1) de s'écarter temporairement de la position de fonctionnement.
